# EUROPEAN PATENT APPLICATION

(11) **EP 1 278 045 A1**
(43) Date of publication of application: **22.01.2003**
(21) Application number: 01272816.8
(22) Date of filing: 17.12.2001
(51) Int. Cl.: G01D 11/28

(54) **DISPLAY DEVICE**

(30) Priority: 27.12.2000 JP 2000398322
(71) Applicant: Nippon Seiki Co., Ltd., Nagaoka-shi, Niigata 940-8580 (JP)
(72) Inventor: OBATA, Masato, c/o Nippon Seiki Co., Ltd., Nagaoka-shi, Niigata 940-8580 (JP); ONDA, Ichiro, c/o Nippon Seiki Co., Ltd., Nagaoka-shi, Niigata 940-8580 (JP); ADACHI, Masato, c/o Nippon Seiki Co., Ltd., Nagaoka-shi, Niigata 940-8580 (JP)
(74) Representative: Jackson, Richard Eric
(86) International application number: JP0111050
(87) International publication number: WO02054017

(57) **Abstract**

A display device capable of controlling the cost increase and relieving the limitation of conversion colors is provided. The display device includes a light emitting diode (first light emitting diode) 6; an indicator portion 43 transilluminated by a light of a different color from that of an emission light from the light emitting diode 6; an illumination chamber 8 interposed between the indicator portion 43 and the light emitting diode 6 and serving to direct the light from the light emitting diode 6 to the indicator portion 43; and a fluorescent reflection film 9 formed on a wall of the illumination chamber 8 for converting the color of the light incident on the indicator portion 43.

## Description

### Technical Field

The present invention relates to a display device mounted to a variety of mobile units typically represented by automobiles, motor cycles, vessels, agricultural or construction machines, and aircraft, and designed to illuminate a predetermined indicator for display by means of an energized light source.

### Background Art

Conventionally, a variety of display devices have been mounted to, for instance, dashboards of automobiles. One example of such display devices is a combination meter. The combination meter incorporates therein a variety of meters for indication of various measurement values such as a vehicle speed, a rotational speed of an engine, a coolant temperature, an amount of fuel and the like; displays for indication of a traveled distance, an outside temperature and the like; indicators for indication of noticing or warning information related to an internal combustion system and driving system; and switches to be operated by an operator. The combination meter further includes a light source for illuminating these meters, displays, indicators and switches in a predetermined illumination color.

Now, description is made by way of example of the meters. In the case of a dial type meter, an indicator section 04 consists of a pointer 01 adapted to rotate about an axis according to a measurement value, and an index portion 03 including calibration markings formed on a panel member 02 disposed rearwardly of the pointer 01. These elements of the indicator section 04 are formed of a transparent material. For instance, the pointer 01 is formed of a transparent resin material whereas the index portion 03 is formed of a print layer of a transparent ink composition. The pointer and the index portion are transilluminated by a light from a light source 05 disposed rearwardly of the panel member 02. Examples of a commonly used light source 05 include incandescent bulbs (tungsten lamps), light emitting diodes and the like.

The incandescent bulb (tungsten lamp) is a light source 05 normally emitting an achromatic light (white). In a case where the indicator section 04 is illuminated by a colored light, an emission light is colored by permitting the light to pass through a color filter 06 of a transparent print layer, the colored light transilluminating the indicator section O4 in a different color than a color of the light from the source 05.

On the other hand, the light emitting diode has merits of smaller size, less heat generation and less power consumption as compared with the incandescent bulb. Recently, the trend is particularly moving toward the use of a surface-mounted light emitting diode. The light emitting diode is a light source 05 which emits a monochromatic light of a narrow wavelength range (wavelength distribution) . In a case where the indicator section 04 is illuminated by the color light as described above, it is a general practice to select a light emitting diode for emitting a light of a color corresponding to an intended illumination color.

Unfortunately, the light emitting diode for emitting the monochromatic light is limited in the luminescent colors. For example, there may be a case where the light emitting diode is required of a neutral color rather than the intrinsic luminescent color thereof . In this case, a desired illumination color is obtained by providing a plurality of light emitting diodes individually emitting lights of different colors and blending the luminesenct colors thereof, as disclosed in Japanese Unexamined Utility Model Publication No. 6 (1994)-76823, for example. Similarly to the case of the incandescent bulb, an emission light may be filtered through the color filter 06 for converting the color of the light to the desired color. However, the emission light from the light emitting diode has a narrower wavelength range than that from the incandescent bulb and hence, much of the wave components of the emission light is absorbed by the simple color filter 06 due to the electroabsorption effect thereof. This leads to a serious decrease in luminance or a difficulty to change the color of the emission light to the desired color. In one attempt, a fluorescent filter having a fluorescent material mixed therein is used such that the color conversion may be accomplished by absorbing the emission light while re-emitting an excitation light.

However, in the aforementioned approach to obtain the desired illumination color by blending the color lights from the plural light emitting diodes, the increased number of light emitting diodes results in not only an increased cost but also a difficult control of current through the individual light emitting diodes. In addition, drive circuits for the light emitting diodes are complicated. On the other hand, the approach to obtain the desired illumination color by means of the fluorescent filter encounters the limitation of conversion colors offered by the fluorescent filter. Furthermore, color tone adjustment is no easy because the color tone varies depending upon the fluorescent material used, the thickness of the filter itself or the like.

With the foregoing in view, the present invention has been accomplished and a main object thereof is to provide a display device capable of controlling the cost increase and relieving the limitation of the conversion colors.

### Disclosure of the Invention

A display device according to the invention comprises: a light emitting diode; an indicator portion transilluminated by a light of a different color from that of an emission light from the light emitting diode; an illumination chamber interposed between the indicator portion and the light emitting diode and serving to direct the light from the light emitting diode to the indicator portion; and a fluorescent reflection film formed on a wall of the illumination chamber for converting the color of the light incident on the indicator portion.

A display device according to the invention is characterized in that the fluorescent reflection film absorbs a received light and re-emits an excitation light.

A display device according to the invention is characterized in that the fluorescent reflection film converts the received light to the light increased in wavelength.

A display device according to the invention is characterized in that the indicator portion is provided at a panel member constituting a part of the illumination chamber and the fluorescent reflection film is formed on the panel member.

A display device according to the invention is characterized in that the indicator portion is provided at a panel member constituting a part of the illumination chamber, that a frame constituting a part of the illumination chamber is extended between the panel member and the light emitting diode as surrounding an illumination path extended from the light emitting diode to the panel member, and that the fluorescent reflection film is formed on at least one of the walls of the panel member and the frame that permits the light to be reflected back into the illumination chamber.

A display device according to the invention is characterized in that the light emitting diode is disposed in opposing relation with the panel member and on a substrate constituting a part of the illumination chamber.

A display device according to the invention is characterized in that the substrate is formed with the fluorescent reflection film on its wall that permits the light to be reflected back into the illumination chamber.

### Brief Description of the Drawings

Figs. 1 and 2 illustrate a first embodiment of the invention, Fig. 1 showing a principal portion of a display device in section whereas Fig.2 showing a chromaticity diagram representing colors of lights incident on an indicator portion;
Figs.3 and 4 illustrate a second embodiment of the invention, Fig. 3 showing a principal portion of a display device whereas Fig.4 showing a chromaticity diagram representing illumination colors for an indicator portion (liquid crystal panel);
Fig.5 is a front view showing a principal portion of a third embodiment of the invention; and
Fig.6 is a sectional view showing a principal portion of a prior-art example.

### Best Mode for Carrying Out the Invention

Now referring to the accompanying drawings, an embodiment of the invention will hereinbelow be described by way of example where a display device according to the invention is applied to a dial type meter for use in automobiles.

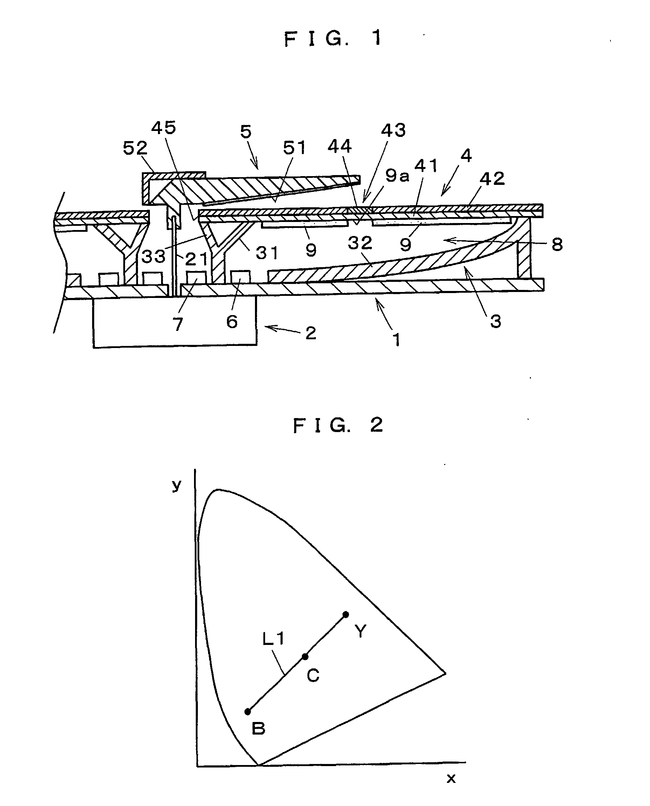

As shown in Fig.1, the dial type meter according to a first embodiment of the invention includes a circuit board (substrate) 1, a meter body 2, a frame 3, a panel member 4, a pointer 5 and a first and second light emitting diode 6, 7.

The circuit board 1 comprises a hard circuit board such as based on a paper phenol or glass epoxy and has an arrangement wherein a plurality of wiring patterns (not shown) of a predetermined copper foil material is laid on a front side of the circuit board and wherein the meter body 2 and the first and second light emitting diodes 6, 7 are electrically connected with the wiring patterns.

The meter body 2 is mounted to a rear side of the circuit board 1. The meter body has a drive shaft 21 adapted to rotate according to a measurement value such as of a traveling velocity, and a terminal (not shown). The drive shaft and terminal extend through the circuit board 1 to project from the front side thereof, the terminal soldered to the wiring pattern for connection.

The frame 3 comprises a white synthetic resin. The frame rests on the circuit board 1 as sandwiched between the circuit board 1 and the panel member 4. The frame 3 includes a first reflection portion 31 formed in opposing relation to the first light emitting diode 6 and serving to reflect light from the first light emitting diode 6 to a peripheral area; a second reflection portion 32 extended from an outer periphery of the first light emitting diode 6 to a periphery of the panel member 4 in a bending fashion and serving to reflect the light from the first reflection portion 31 toward the panel member 4; and a cylindrical portion 33 extended toward the pointer 5 as surrounding the drive shaft 21 and the second light emitting diode 7 for guiding the light from the second light emitting diode 7 to the pointer 5.

The panel member 4 is a plate or sheet material supported by the frame 3 and has an arrangement wherein a substrate 41 comprising a transparent synthetic resin is formed with a light-tight base 42 and a transparent white colored portion 44 on a front side thereof, the base and colored portion 44 formed by screen printing using a UV curing ink composition for example, the colored portion formed with an indicator portion 43 having calibration markings, characters, symbols or the like in correspondence to the pointer 5 . In this case, the transparent colored portion 44 is formed at a cutaway portion by printing, where the base 42 is absent. A through hole 45 for permitting the connection between the pointer 5 and the drive shaft 21 is formed at place corresponding to a center of rotation of the pointer 5.

The pointer 5 is formed from a transparent synthetic resin in a linear shape. The pointer is formed with a colored portion 51, such as of a red hot stamp layer, on a rear side thereof, and with a light-tight cover 52 at the center of rotation thereof. The pointer is designed to be moved by the drive shaft 21 for pointing any place of the indicator portion 43.

Both the first and second light emitting diodes 6, 7 are of surface-mount type. The first light emitting diode 6 has a blue emission light for transilluminating the indicator portion 43 from rear, whereas the second light emitting diode 7 has a red emission light for transilluminating the pointer 5 from rear. It is noted that the light emitting diodes 6, 7 may not be of surface-mount type. A usable light emitting diode may be of a type which includes a shell-shaped synthetic-resin mold portion from which a pair of leads are projected.

The panel member 4, the frame 3 and the circuit board 1 jointly define an illumination chamber 8 between the first light emitting diode 6 and the indicator portion 43, the illumination chamber 8 serving to guide the light from the light emitting diode 6 to the indicator portion 43. The illumination chamber 8 includes a fluorescent reflection film 9 attached to a wall of the panel member 4 constituting a part of the illumination chamber.

The fluorescent reflection film 9 is formed on the rear side of the substrate 41 by screen printing using a fluorescent ink composition prepared by, for example, admixing a fluorescent material based on a fluorescent pigment or dye to the same UV curing ink composition as that used for forming the base 42 and indicator portion 43. In this embodiment, the fluorescent film is deposited in a manner to continuously cover a peripheral area of a cutaway portion 9a for forming the indicator portion 43, such that the indicator portion 43 is uncovered. If the fluorescent reflection film 9 receives the emission light directly from the first light emitting diode 6, for example, the fluorescent reflection film absorbs the blue light therefrom and re-emits an excitation light. During the excitation, the fluorescent reflection film converts the blue light to a yellow light of a greater wavelength than the blue light and re-emits (reflects) the resultant yellow light into the illumination chamber 8.

In the dial type meter thus arranged, when the first and second light emitting diodes 6, 7 are energized, the pointer 5 is illuminated in red by the second light emitting diode 7 having the red emission light, whereas the indicator portion 43 is illuminated by a mixture of lights through the transparent colored portion 44 comprising the white ink, the light mixture including a light entering the transparent colored portion via a direct course from the diode or after reflected by the reflection portions 31 and 32 but not by the fluorescent reflection film 9, and a light converted in color by taking a course via the fluorescent reflection film 9 before entering the transparent colored portion.

In this case, the light incident on the indicator portion 43 has a mixed color having color coordinates on a line L1 or in the vicinity thereof, as shown in Fig.2, the line L1 interconnecting a coordinate point B representative of the blue of the emission light from the first light emitting diode and a coordinate point Y representative of the yellow of the light converted by the fluorescent reflection film 9 so as to be increased in wavelength. This embodiment defines the color coordinates of the mixed color to be positioned near a point C substantially intermediate between the coordinate points B and Y, the point C representing a monochromatic color (white) . Thus, the monochromatic light passes through the transparent colored portion 44 so that the indicator portion 43 is illuminated in white.

It is noted that the fluorescent reflection film 9 can be formed not only on the panel member 4 but also on a wall of the frame 3 or the circuit board 1 constituting the illumination chamber 8. In this case, the fluorescent reflection film 9 may be formed on the whole body of the illumination chamber 8 or a part thereof by adjusting the formation area or shape of the reflection film, whereby the light incident on the indicator portion 43 can be defined to have an optional color that has the coordinates on the interconnection line L1 or in the vicinity thereof as seen in Fig.2. Specifically, the fluorescent reflection film 9 for converting the light represented by the coordinate point B into the light represented by the coordinate point Y is adjusted for the formation area or shape thereof based on the coordinate point B representing the color of the emission light from the first light emitting diode, thereby adjusting balance (ratio) between the blue light as the emission light from the first light emitting diode 6 and the yellow light as the result of the color conversion by the fluorescent reflection film 9. This permits the establishment of an optional color with its coordinate point positioned on the interconnection line L1 or in the vicinity thereof.

As mentioned supra, the display device according to the invention includes the light emitting diode (the first light emitting diode) 6; the indicator portion 43 transilluminated by the light of a different color from that of the emission light from the light emitting diode 6; the illumination chamber 8 interposed between the indicator portion 43 and the light emitting diode 6 for guiding the light from the light emitting diode 6 to the indicator portion 43; and the fluorescent reflection film 9 formed on the wall of the illumination chamber 8 for color conversion of the light incident on the indicator portion 43. The inventive display device is adapted for the color conversion of the light incident on the indicator portion 43 without using a plurality of light emitting diodes 6 having different emission colors, thus controlling the cost increase.

Furthermore, this embodiment is adapted to perform the color conversion by means of the illumination chamber 8 having the fluorescent reflection film 9, so that the color conversion does not rely on the fluorescent filter. Therefore, the limitation of the conversion colors is relieved. This provides for the expansion of the range of color selection or color adjustment, which leads to an increased freedom of the definition or adjustment of the conversion color. Specifically, various color definitions or adjustments are permitted by proper adjustment of the formation area or shape of the fluorescent reflection film 9.

According to the embodiment hereof, the panel member 4 is formed with the fluorescent reflection film 9. Likewise to other parts of the unit, the fluorescent reflection film 9, in particular, is deposited by the printing method such as screen printing and the like, so that the fluorescent reflection film 9 can be formed in an easy and efficient manner and the cost reduction can be achieved.

As to the formation of the fluorescent reflection film 9 on the panel member 4 according to the embodiment hereof, the fluorescent reflection film is formed on the wall of the substrate 41 that faces the illumination chamber 8 (or on a rear side of the substrate 41). Alternatively, the fluorescent reflection film 9 may be formed on a front side of the substrate 41 or between the substrate and the base 42.

According to the embodiment hereof, the illumination chamber 8 is defined by a cavity. However, the illumination chamber may be internally provided with an optical conductor. In this case, the fluorescent reflection film 9 may be formed on a wall of the optical conductor.

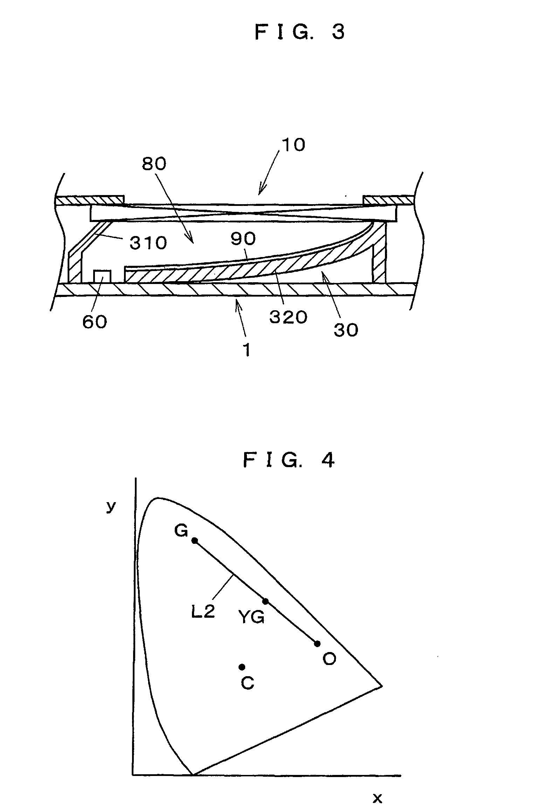

Next, a second embodiment of the invention will be described. As shown in Fig.3, a display device according to this embodiment comprises a liquid crystal display device which includes a liquid crystal panel (indicator portion) 10; an illumination chamber 80 forming back light for the liquid crystal panel 10; and a light emitting diode 60.

The liquid crystal panel 10 employs an optional model of a rear projection type, whereas the illumination chamber 80 is defined by the liquid crystal panel 10, the circuit board (substrate) 1 and the frame 30.

The frame 30 is provided with a first reflection portion 310 opposing the light emitting diode 60 for reflecting an emission light therefrom in a rightward direction as seen in Fig.3; and a second reflection portion 320 for reflecting the light from the first reflection portion 310 toward the liquid crystal panel 10. The fluorescent reflection film 90 is formed on a wall of the second reflection portion 320 by painting or the like.

In this embodiment, the light emitting diode 60 employs a surface-mount type light emitting diode having a green emission light. When receiving the emission light directly from the light emitting diode 60, the fluorescent reflection film 90 carries out both the light absorption and the re-emission of an excitation light. During the excitation, the fluorescent reflection film converts the green light to an orange light having a greater wavelength than the former and re-emits the resultant light.

Thus, the liquid crystal panel 10 is transilluminated (backlit) in an illumination color which results from the mixing of a light not taking a course via the fluorescent reflection film 90 but reaching directly from the light emitting diode 60 and a light converted in color by taking a course via the fluorescent reflection film 90.

At this time, the light incident on the liquid crystal panel 10 has a mixed color having color coordinates on a line L2 or in the vicinity thereof, as shown in Fig.4, the line L2 interconnecting a coordinate point G representative of the green of the emission light from the light emitting diode 60 and a coordinate point O representative of the orange of the light converted and increased in wavelength by the fluorescent reflection film 9. This embodiment defines the color coordinates of the mixed color to be positioned near a point YG substantially intermediate between the coordinate points G and O, so that the liquid crystal panel 10 is backlit by a yellow-green light.

Similarly to the aforementioned first embodiment, the formation area or shape of the fluorescent reflection film 9 is adjusted so as to define the light incident on the liquid crystal panel 10 to have an optional color that has color coordinates on the interconnection line L2 or in the vicinity thereof as seen in Fig.4.

Likewise to the aforementioned first embodiment, the effects of controlling the cost increase and increasing the freedom of color definition or adjustment can also be expected from this embodiment.

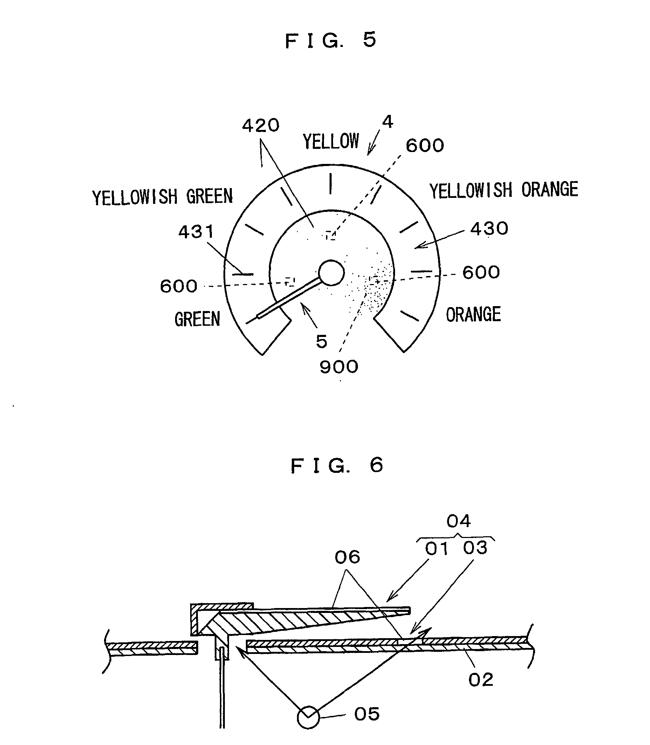

Next, a third embodiment of the invention will be described. As shown in Fig.5, a display device with a dial type meter according to the invention has an arrangement wherein the panel member 4 is provided with a light-tight base 420; a transparent indicator portion 430 formed in an annular shape by blanking the base 420 and corresponding to a rotary orbit of the pointer 5 ; and light-tight or transparent index portions 431 arranged at predetermined space intervals and individually representing a calibration marking, character or symbol, and wherein a fluorescent reflection film 900 is disposed on a rear side of the base 420 centrally positioned as seen in Fig.5 whereas three light emitting diodes 600 having a green emission light are disposed on an opposite side of the base from the fluorescent reflection film and arranged with equal spacing. This embodiment is resemblent to the aforementioned first embodiment in that the display device includes the panel member 4, on a rear side of which the unillustrated illumination chamber is formed.

In this case, the fluorescent reflection film 900 is formed in a dither pattern (dots) by screen printing or the like, the dither pattern adjusted for the formation area and density thereof according to the illumination color for the indicator portion 430. When the light emitting diodes 600 are energized, the fluorescent reflection film 900 receives the green emission light therefrom and reflects color-converted lights principally including yellow-green, yellow, yellow-orange and orange. Thus, the display device is arranged such that the annular indicator portion 430 is illuminated in gradations of multiple colors sequentially varying from green, yellow-green, yellow-orange to orange in the order cited from the left side as seen in the figure (the lights gradually increased in wavelength). In this case, the fluorescent reflection film 900 is formed in a manner that with increase in the wavelength of the converted light (toward orange), the reflection film is gradually increased in the formation area and density. It is noted that the fluorescent reflection film 900 is not formed at an area corresponding to a green illumination.

The same effects as those provided by the first and second embodiments can also be expected from such an embodiment. Furthermore, this embodiment not only provides the multiple color illumination based on a single color of the emission light but also permits the illumination in color gradations, thus achieving an enhanced illumination design characteristic.

The first embodiment illustrates the example wherein the fluorescent reflection film 9 for converting the blue light to the yellow light is used for illuminating the indicator portion 43 in white. The second embodiment illustrates the example wherein the fluorescent reflection film 90 for converting the green light to the orange light is used for illuminating the liquid crystal panel 10, as the indicator portion, in yellow-green. The third embodiment illustrates the example wherein the fluorescent reflection film 900 with its formation mode so adjusted as to convert the green light to the lights gradually increased in wavelength is used for illuminating the indicator portion 430 in gradations of multiple colors. However, the color of the light becoming incident on the indicator portion 43, 430 or liquid crystal panel 10 via the fluorescent reflection film 9, 90, 900 provided on the illumination chamber 8, 80 and transilluminating such an element may be properly defined according to the illumination color for the indicator portion 43, 430 or the liquid crystal panel 10.

The invention is effective to obtain a luminescent color which is unavailable from the light emitting diode (chip) per se, as demonstrated by the first embodiment for example. Although not particularly illustrated as another embodiment, there is an approach to use, for example, a light emitting diode having a yellow or orange emission light for obtaining an intermediate luminescent color between yellow and orange, that has a dominant wavelength on chromaticity diagram in the range of 580 nm to 585 nm.

### Industrial Applicability

The invention is applicable not only to the display device mounted to a variety of mobile units typically represented by automobiles, motor cycles, vessels, agricultural or construction machines, and aircraft, but also to any other kinds of display devices adapted to illuminate the indicator portion using the light from the light source.

## Claims

1. A display device comprising: a light emitting diode; an indicator portion transilluminated by a light of a different color from that of an emission light from the light emitting diode; an illumination chamber interposed between the indicator portion and the light emitting diode and serving to direct the light from the light emitting diode to the indicator portion; and a fluorescent reflection film formed on a wall of the illumination chamber for converting the color of the light incident on the indicator portion.

2. A display device as claimed in Claim 1, wherein the fluorescent reflection film absorbs a received light and re-emits an excitation light.

3. A display device as claimed in Claim 2, wherein the fluorescent reflection film converts the received light to the light increased in wavelength.

4. A display device as claimed in Claim 1, wherein the indicator portion is provided at a panel member constituting a part of the illumination chamber and the fluorescent reflection film is formed on the panel member.

5. A display device as claimed in Claim 1, wherein the indicator portion is provided at a panel member constituting a part of the illumination chamber; wherein a frame constituting a part of the illumination chamber is extended between the panel member and the light emitting diode as surrounding an illumination path extended from the light emitting diode to the panel member; and wherein the fluorescent reflection film is formed on at least one of the walls of the panel member and the frame that permits the light to be reflected back into the illumination chamber.

6. A display device as claimed in Claim 1, wherein the light emitting diode is disposed on a substrate constituting a part of the illumination chamber.

7. A display device as claimed in Claim 6, wherein the substrate is formed with the fluorescent reflection film on its wall that permits the light to be reflected back into the illumination chamber.
